Europäisches Patentamt

**European Patent Office**

**Office européen des brevets**

(11) Publication number: **0 035 359**
**A2**

# EUROPEAN PATENT APPLICATION

(21) Application number: **81300769.7**

(22) Date of filing: **25.02.81**

(51) Int. Cl.³: **B 62 K 21/12,** B 62 K 21/26

(30) Priority: **01.03.80 JP 26759/80 U**
**01.03.80 JP 26760/80 U**

(43) Date of publication of application: **09.09.81**
**Bulletin 81/36**

(84) Designated Contracting States: **BE DE FR GB IT**

(71) Applicant: **SHIMANO INDUSTRIAL COMPANY LIMITED,**
**77, 3-cho Oimatsu-cho Sakai-shi, Osaka (JP)**

(72) Inventor: **Shimano, Keizo, 81, 3-cho,**
**Midorigaoka-Minamimachi, Sakai-shi Osaka (JP)**

(74) Representative: **Szczuka, Jan Tymoteusz et al,**
**Cruikshank & Fairweather 19 Royal Exchange Square,**
**Glasgow G1 3AE Scotland (GB)**

(54) **Cycle handlebar system.**

(57) This invention relates to a pair of handlebars for a cycle for mounting on a handlebar stem (10) thereof, said handlebars being provided with a central body portion (2) with a mounting portion (11a) via which said pair of handlebars is mounted on said handlebar stem (10), and a pair of gripping portions (3) disposed at respective opposite ends (12) of said central body members (2). Known such handlebars are difficult to install and change and the mountings of brake control lever brackets are subject to corrosion etc.

According to this invention said handlebars comprises discrete central body and gripping members (2, 3) formed separately from each other, each of said gripping members (3) having an integrally formed bracket (4) for supporting a control lever (8), each of said gripping members (3) being secured to said central body member (2) by a respective fixing means (5–7).

0035359

## CYCLE HANDLEBAR SYSTEM

This invention relates to a pair of handlebars for a cycle for mounting on a handlebar stem thereof, said handlebars being provided with a central body portion with a mounting portion via which said pair of handlebars is mounted on said handlebar stem, and a pair of gripping portions disposed at respective opposite ends of said central body member.

In general cycle handlebars are made from metallic pipe and with integrally formed central and gripping portions, the latter carrying braking control levers or the like via bracket members which are formed separately from said gripping portions and secured thereto by means of bands.

The gripping portions are cranked away from the longitudinal axis of the straight central portion so that a rider can easily grip them. This can however make it troublesome, especially in the case of drop type handlebars, to insert the central portion into a tubular handlebar mounting lug provided at the distal end of the handlebar stem of the cycle because the central portion is formed integrally with the cranked gripping portions.

Also, in order to attach braking control levers to the handlebars, separate bracket members need be mounted on the handlebars, usually by means of bands. The mounting of these can thus take up a considerable amount of time. In addition the mounting bands are substantially exposed to the elements and their appearance can become adversely affected.

Furthermore, as the integrally formed gripping portions are essentially in the form of a pipe, they are not ideally suited to fit into a driver's hands. Thus it becomes desirable to fit additional grip means e.g. of moulded rubber onto the gripping portions.

The gripping portions of the handlebars, especially of drop type handlebars, are also desirably replaced to suit particular cycle constructions and/or an individual rider's physique. Conventional handlebars integrally formed from a metallic pipe are however not readily changeable due to the abovementioned difficulties of mounting. In addition the handlebars, whether flat – upwardly extending –, or drop-type, are not normally adjustable in length.

It is an object of the present invention to avoid one or more of the above disadvantages.

This invention is characterized in that the central body portion and gripping portions are formed independently of each other and are secured to each other by fixing means, and in that bracket members for supporting control levers are formed integrally with the gripping members.

Thus the present invention provides a pair of handlebars for a cycle for mounting on a handlebar stem thereof, said handlebars being provided with a central body portion with a mounting portion via which said pair of handlebars is mounted on said handlebar stem, and a pair of gripping portions disposed at respective opposite ends of said central body portion characterized in that said handlebars comprises discrete central body and gripping members formed separately from each other, each of said gripping members having an integrally formed bracket for supporting a control lever, each of said gripping members being secured to said central body member by a respective fixing means.

This invention is applicable to a flat, – upwardly extending or upright – , and drop-type handlebars,

-3-

0035359

but is especially advantageous when applied to drop-type handlebars.

A rider, when steering a cycle by manipulating drop-type handlebars, sometimes grips a straight central portion which extends substantially horizontally from a mounting portion via which the handlebars are mounted on the handlebar stem, but at other times grips upper portions of second cranked portions which extend forwardly and curve downwardly and rearwardly from first cranked portions curving forwardly from the ends of the first straight portions; and at still other times second straight portions which extend rearwardly from the lower rear ends of the second cranked portions.

A pair of drop-type handlebars of the present invention is discontinuous between the second cranked portions and the first cranked portions, so that they include a pair of discrete generally U-shaped members each of which includes a respective second bent portion and a respective second straight portion. For convenience these U-shaped members will hereinafter be referred to as gripping members. The gripping members serve as the main point of the drop-type handlebar, because the aforesaid second cranked portions and second straight portions are provided to enable the driver to adjust his grip on the handlebars when changing his posture during riding of the cycle.

The handlebars of the invention, which are divided into the central body and discrete gripping members connected thereto by fixing means, can thus meet the requirements of riders with different physique and with different and/or varying preferences as to riding position by permitting use of a plurality of interchangeable gripping members of different shapes and sizes with a given central member already secured to the handlebar stem of a cycle.

The separate central member is mounted on the handlebar stem prior to fixing of the gripping members thereto, thereby facilitating its ready insertion through the handlebar mounting lug regardless of the shape and size of the gripping members to be used with said central member

Also the discrete central b o d y and gripping members require much less space for storage or transport than integrally formed systems.

Furthermore, individual gripping members (or pairs thereof) can be formed with special shapes, for example with reduced wind resistance, to fit closely in the rider's hands, or to provide a greater or lesser than average length of handlebar. The integral bracket member of the gripping member can easily mount a brake control lever or the like without the use of a fixing band exposed to the elements so that the handlebar provides reduced wind resistance, has a good 'clean' appearance, and avoids the possibility of accidental displacement of the control lever mounting due to loosening of the band.

Further preferred features and advantages of the invention will appear from the following description given by way of example of some preferred embodiments illustrated with reference to the accompanying drawings in which:

Fig. 1 is a perspective view of a first embodiment of a pair of drop-type handlebars of the invention;

Fig. 2 is a partially cutaway side view of a principal portion of the handlebars of Fig. 1;

Fig. 3 is a view of a part of a second embodiment of a pair of flat-type handlebars of the invention; and

Fig. 4 is a perspective view of a third embodiment of a pair of upright-type handlebars of the invention.

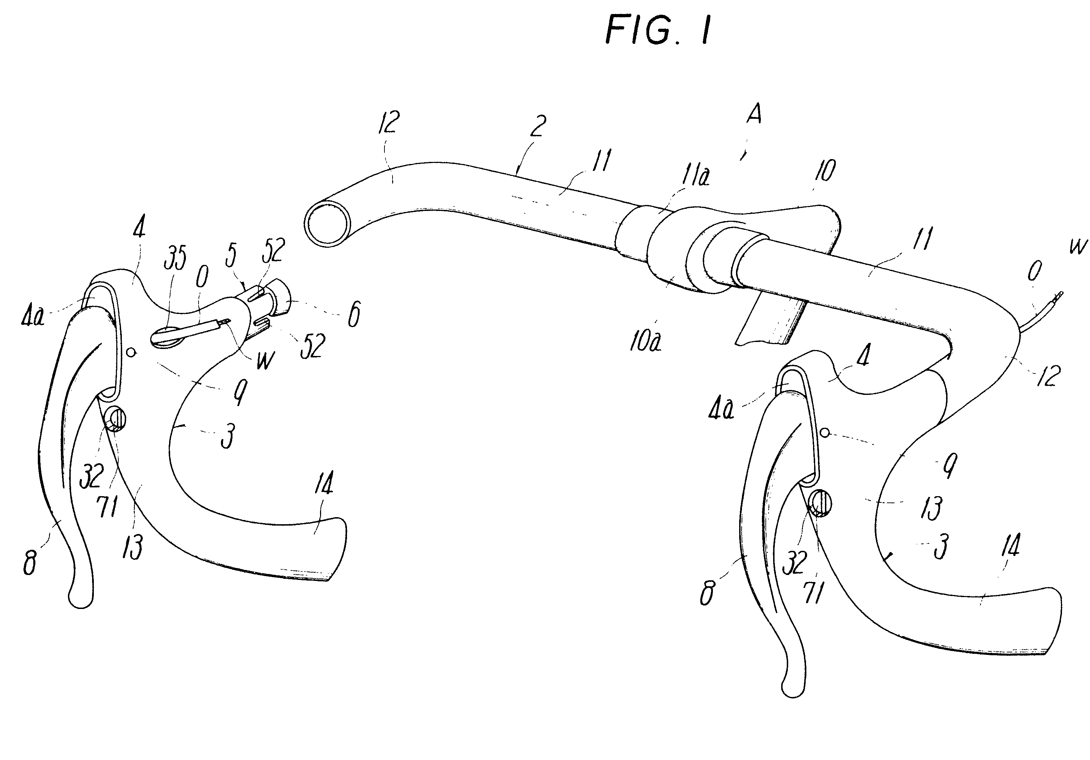

Fig. 1 shows a pair of drop-type handlebars A provided mainly on sports type cycles. The drop-type

handlebars A comprises a straight central portion 11 with a mounting portion 11a disposed centrally thereof and through which the pair of handlebars is mounted on a handlebar stem 10 of the cycle (not shown). Extending horizontally from the central portion 11, first cranked arcuate portions 12 extending forwardly of the cycle from the outer ends of said central portion 11. Second cranked arcuate portions 13 extend downwardly and rearwardly from the forward ends of respective first cranked portions 12, and second straight portions 14 extend rearwardly from the lower rearward ends of the respective second cranked portions 13. A rider can steer the cycle by gripping the central straight portion 11 while riding at low speed, the second cranked portions 13 at intermediate speeds, and the second straight portions 14 at high speed.

The drop-type handlebars A has a pair of discrete generally U-shaped gripping members 3 which include the second cranked portions 13 and the second straight portions 14. The gripping members 13 are separate from a central body member 2 which comprises the straight central portion 11 and first cranked portions 12. The gripping members 3 have integrally formed brackets 4 which carry brake control levers 8 or the like.

The central body member 2 is formed of a steel or light alloy pipe. The gripping members 3 are formed of aluminium which has been cast or die cast, and each has a fixing means for use in fixing the gripping member 3 to the central body member 2 as shown in Fig. 1.

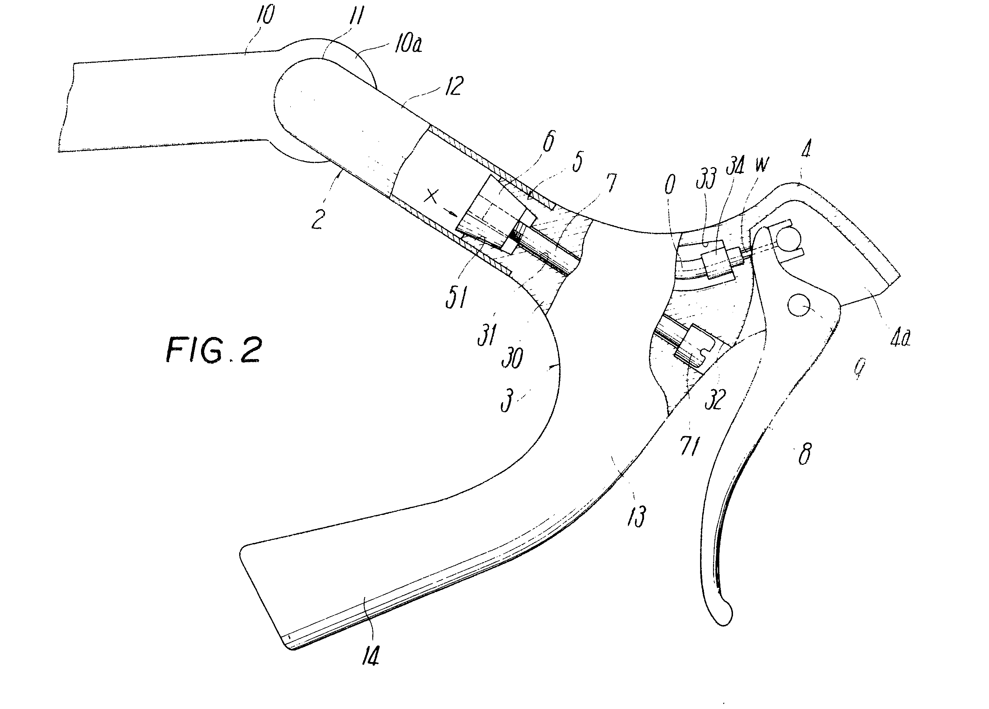

Each of the fixing means, as shown in Fig. 2, is so constructed that; each gripping member 3 is provided at its end which is to be fixed to the central body member 2 with a tubular clamp 5 which has a frustoconical internal surface 51 tapering inwardly away from its open end and is provided with a plurality of generally extending slits or cutouts 52, and which projects from the gripping member 3 for location internally of the respective open end of the central body member 2. Each gripping member 3 is provided with a frusto-conical actuator 6 which engages the internal frusto-conical surface 51 of the clamp 5 to allow the clamp 5 to radially expand and press, in turn, against the internal surface of the central body portion 2, a screw threaded drive member 7 engaged with the actuator 6 being used to drive it lengthwise of the clamp 5, the head 71 of the screw threaded drive member 7 engaging the gripping member 3 for rotation relative thereto.

Each gripping member 3 shown in Fig. 2 is made partially solid, and is provided at a solid portion 30 thereof with an insertion bore 31 for the screw threaded drive member 7 and at its outer surface with an enlarged diameter recess 32 for receiving therein the head 71 of the screw threaded drive member 7.

The above described fixing means secures each gripping member 3 to the central body member 2 in such a manner that the clamp 5 locates in the respective open end of the central body member 2 and the screw threaded drive member 7 can be rotated by a screwdriver or the like, so that the actuator 6 is drawn in the direction of the arrow X in Fig. 2 to radially expand the clamp 5 and press it against the internal surface of the open end of the central body member 2. By this means, the gripping members 3 are secured to the central body portion 2 through clamps 5 respectively.

The respective brackets 4 are provided at the front ends of the second cranked portions 13, extend upwardly therefrom, and are hollow so as to form a cavity 4a in which one end of a braking control lever 8 is pivotally mounted by means of a pivot pin 9.

The solid portion 30, as shown in Fig. 2, is also provided with an insertion bore 33 for a control wire

0035359

W which is fixed at one end to the brake control lever 8, for an outer sheath O guiding the control wire W, and for a stop in the form of a nipple 34 for the outer sheath O. The insertion bore 33, as shown in Fig. 1, is open 35 at one side of the gripping member 3, and the wire W and outer sheath O are led out through the opening 35.

The central body member 2 is fixed to the handlebar mounting lug 10a at the handlebar stem 10 prior to fixing of gripping members 3 to the central body member 2, thus facilitating insertion of the central body member 2 through the handlebar lug 10a.

The drop-type handlebars of the invention has the brackets 4 rising from the front ends of the second cranked portions 13, so that a rider, when riding the cycle and gripping the front portions of the second cranked portions 13, can manipulate the handlebars in a stable condition because the brackets 4 serve as stops for his hands, and also his palms fit well on said second cranked portions 13. Thus the rider suffers less fatigue even when riding the cycle for a long period of time.

The handlebars of the invention may equally well be of the flat-type or upright-type of handlebars.

The well-known flat type handlebars comprises a straight central body member extending substantially horizontally from a mounting portion of the handlebar stem 10, and gripping portions formed in continuation of the central body member and extending outwardly therefrom, substantially at the same level as the mounting portion.

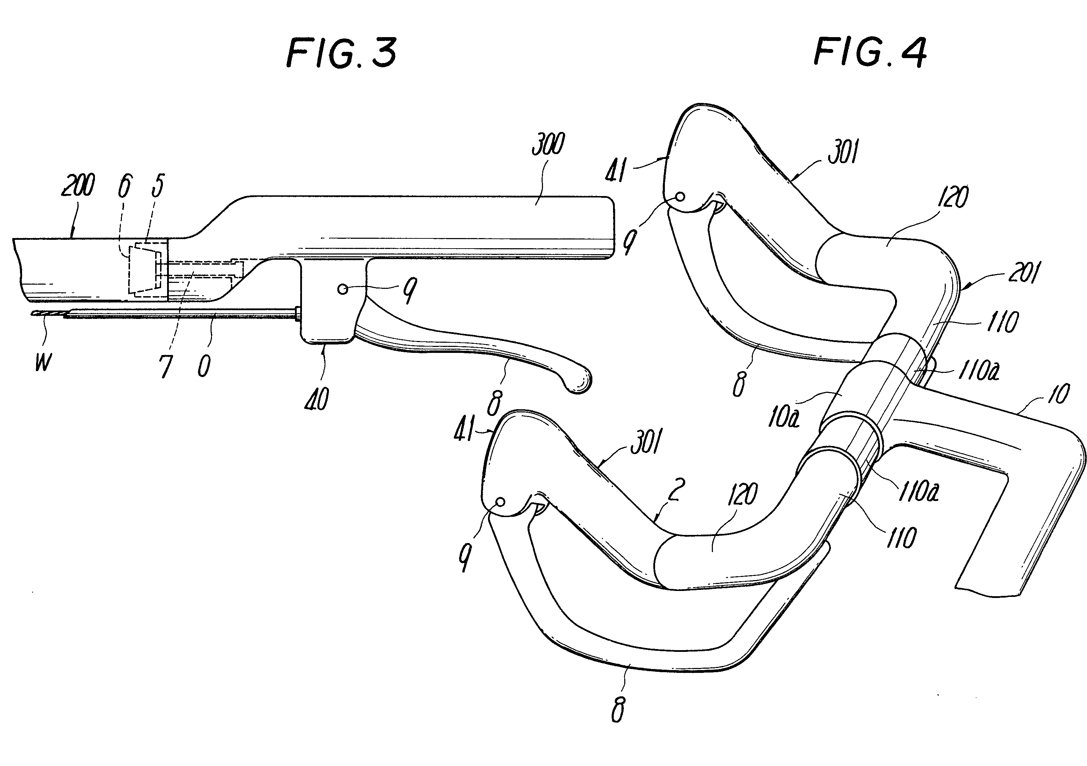

According to the present invention a flat-type handlebars comprises a central body member 200 formed separately from discrete gripping members 300. The central body member 200 has a central mounting portion and straight portions extending substantially horizontally from each end thereof. The gripping members 300 have

0035359

straight portions extending in the same direction as said straight portions of the central body member 200 and in continuation thereof. Thereafter the gripping portions may be cranked rearwardly with straight terminal portions extending rearwardly from the cranked portions. Alternatively the gripping portions may be cranked so that the terminal portions are staggered and extend parallel to but above the central body member 200 as shown in Fig. 3. Brackets 40 are formed integrally with the discrete gripping members 300 so as to project downwardly as shown in Fig. 3.

It will of course be appreciated that the above references (and other like references hereinafter) to rearwardly, above, downwardly etc. are with respect to the normal disposition of the handlebars on a cycle in use thereof and that they do not preclude the use of the handlebars in other dispositions if desired. Thus for example the handlebars of Fig. 3 could be rotated through 90° so that the brackets 40 project forwardly and the terminal portions are disposed rearwardly of the central mounting member 200.

The fixing means via which the gripping members 300 are secured to the central body member 200 are of the same construction as in the case of the abovedescribed drop-type handlebars, the various parts of the fixing means shown in Fig. 3 being designated by the same reference numerals as for the corresponding parts in the embodiment of Figs. 1 and 2.

Fig. 4 shows a further example of handlebars of the invention which in this case are of the well known upright-type and have a central body member 201 comprising a central mounting portion 110a, straight portions 110 extending substantially horizontally from said central mounting portion 110a, and cranked portions 120 extending forwardly from the ends of said straight portions 110.

Gripping members 301 are formed to be straight or upwardly cranked so as to be directed at their distal ends upwardly with respect to the straight portions 110 of the central body member 201. In accordance with the invention the gripping members 301 are formed separately from the central body member 201 being connected thereto by similar fixing means (not shown) to those of the embodiments of Figs. 1 to 3 and are provided with integrally formed brackets 41 at their distal ends, which brackets project downwardly from said distal ends.

As will appear from the above, the present invention is applicable to drop-, flat-, and upright-type handlebars, having in each case discrete gripping members 3, 300 and 301, formed separately from respective central body members 2, 200 and 201. Thus, it is easy to provide the required gripping members 3, 300 or 301, which best fit an individual rider's palms and requirements independently of the central body members 2, 200 and 201, used or to provide several different kinds of gripping members corresponding to the driver's physique or the purpose of use of the cycle, so that the rider can select the most suitable handlebars for any particular occasion.

As may be seen from the above the separately formed central body members 2, 200 and 201 are all easily mounted on the handlebar stem, the integrally formed brackets 4, 40 and 41 permit quick and easy assembly of brake control levers or the like, and by dispensing with the need for mounting bands for the brackets, there is overcome the problem of exposure of the band to the elements.

## CLAIMS

1.  A pair of handlebars for a cycle for mounting on a handlebar stem (10) thereof, said handlebars being provided with a central body portion (2) with a mounting portion (11a) via which said pair of handlebars is mounted on said handlebar stem (10), and a pair of gripping portions (3) disposed at respective opposite ends (12) of said central body portion (2)
characterized in that
said handlebars comprises discrete central body and gripping members (2,3) formed separately from each other, each of said gripping members (3) having an integrally formed bracket (4) for supporting a control lever (8), each of said gripping members (3) being secured to said central body member (2) by a respective fixing means (5-7).

2.  Handlebars according to Claim 1, wherein the central body member (2) extends substantially horizontally from said mounting portion (11a), wherein the gripping members (3) are disposed substantially the same level as said mounting portion (11a), thereby forming a flat-type handlebars, and wherein said brackets (4) project downwardly from said gripping members (3).

3.  Handlebars according to Claim 1, wherein said gripping members (3) are disposed to extend upwardly of said mounting portion (11a) of the central body portion (2) thereby forming an upright-type handlebars, and wherein said brackets (4) are provided at the distal ends of the gripping members (3).

4.  Handlebars according to Claim 1, wherein said central body member (2) comprises straight portions (11) extending substantially horizontally from the mounting portion (11a), each of said gripping members (3) is generally U-shaped having a second cranked arcuate portion

(13) and a second straight portion (14), said second cranked arcuate portion (13) extending forwardly from the respective first cranked portion (12) and curving downwardly and then rearwardly to a lower end of said second cranked arcuate portion (13), said second straight portion (14) extending rearwardly from said lower end of said second cranked arcuate portion (13) so that said central body member (2) and gripping members (3) secured thereto together form a drop-type handlebars.

5. Handlebars according to Claim 4, wherein said brackets (4) project upwardly from the front portions of said second cranked portions (13) of said gripping members (3).

6. Handlebars according to any one of Claims 1 to 5, wherein a control lever (8) is pivotally mounted in the bracket (4) at each of said gripping members (3).

7. Handlebars according to any one of Claims 1 to 6 wherein each said gripping member (3) is provided with a said fixing means (5-7) thereon.

8. Handlebars according to Claim 7, wherein each said fixing means (5-7) includes a cylindrical clamp means (5) and said central body member (2) is in the form of a tubular member, said clamp means (5) being disposed within a respective end of the tubular central body member (2), and wherein said fixing means includes a frustoconical actuator (6) for radially expanding said clamp means (5) against the interior wall surface of the tubular central body member (2) and a drive member (7) engaged with said actuator (6) for driving the latter axially of said clamp means (5) to radially expand said clamp means (5) to securely grip the central body member (2).

FIG. 1

FIG.2

FIG. 3

FIG. 4